# EUROPÄISCHE PATENTSCHRIFT

(11) **EP 1 438 544 B1**
(45) Veröffentlichungstag und Bekanntmachung des Hinweises auf die Patenterteilung: **28.12.2005**
(21) Anmeldenummer: 02767424.1
(22) Anmeldetag: 23.08.2002
(51) Int. Cl.: F28D 3/04, F24F 3/14, B01D 3/00

(54) **KLEINSTFLÜSSIGKEITSMENGENVERTEILER**
DISTRIBUTOR FOR MICRO-QUANTITIES OF LIQUID
DISTRIBUTEUR DE MICRO-QUANTITES DE LIQUIDE

(30) Priorität: 24.08.2001 DE 10141526
(43) Veröffentlichungstag der Anmeldung: 21.07.2004
(73) Patentinhaber: Lävemann, Eberhard, 82194 Gröbenzell (DE); Peltzer, Matthias, 80801 München (DE)
(72) Erfinder: Lävemann, Eberhard, 82194 Gröbenzell (DE); Peltzer, Matthias, 80801 München (DE)
(74) Vertreter: Brandl, Ferdinand Anton
(86) Internationale Anmeldenummer: PCT/EP2002/009458
(87) Internationale Veröffentlichungsnummer: WO 2003/019097

(56) Entgegenhaltungen:
- DE-A- 4 321 743
- DE-A- 10 051 523
- FR-A- 978 800
- US-A- 5 354 460

## Beschreibung

Die Erfindung betrifft einen Kleinstflüssigkeitsmengenverteiler zum Erzeugen eines dünnen Flüssigkeitsfilms auf einer zu benetzenden Fläche.

Bei der Verteilung von Flüssigkeiten auf Austauschflächen von Gas/Flüssigkeits-Kontaktapparaten, z.B. von Plattenaustauschapparaten, werden in der Regel Fluidströme in geeigneten Vorrichtungen verrieselt oder versprüht (Brause, Düse, Tropfenverteiler etc.). Auch Ausführungen mit offenen oder geschlossenen Rinnen oder Kanälen in Verbindung mit Überläufen und/oder Auslauföffnungen finden Verwendung.

Beispielsweise ist aus der DE-OS 43 21 743 eine Flüssigkeitsverteilvorrichtung bekannt, bei der aus einem porösen Schlauch Flüssigkeit auf ein Vlies geträufelt wird. Ebenso ist aus dieser Druckschrift die Verwendung von Sprühverteilern bekannt.

Aus der DE 36 40 886 C1 ist in Flüssigkeitsverteiler für Stoff- und Wärmeaustauschkollonnen bekannt, der aus einem Hauptverteiler mit parallelen Kanälen in Form trogartiger Rinnen besteht, wobei deren Wandungen Lochungen zum Flüssigkeitsaustritt aufweisen. An der Außenseiten der Rinnenwandungen jeweils längslaufend sind Leitbleche aufgesetzt, welche einerseits die Lochungen mit Ausnehmungen von unten umfangen und damit auf die an der Rinnenwandung ablaufenden Flüssigkeit eine Zentrierwirkung ausüben, während die Leitbleche andererseits nach unten zu den Ausnehmungen versetzte

Ausschnitte aufweisen, zur Flüssigkeitsleitung auf dazwischenliegenden Abtropfzungen.

In der DE-OS 28 31 569 ist eine Massenübergangs- bzw. Massenübertragungsvorrichtung zur Erzielung eines Massenübergangs bzw. einer Massenübertragung zwischen zwei Flüssigkeiten bzw. Fluiden offenbart, die einen Flüssigkeitsverteiler aufweist, bei dem die Flüssigkeiten bzw. Fluide, ausgehend von einer Flüssigkeitshauptzuleitung, die sich durch wiederholte Bisektion an Gabelungsstellen in eine Mehrzahl von Flüssigkeitsunterzuleitungen aufzweigt, bis schließlich jeweils eine Flüssigkeitsunterzuleitung in einer Flüssigkeitsaustrittsöffnung mündet, einem die Flüssigkeitsaustrittsöffnungen verbindenden Raum zugeführt werden.

Weitere Flüssigkeitsverteiler sind in der US-A 5,354,460, der DE-A 100 51 523, der DE-A 43 21 743 und der FR-A 978 800 offenbart.

Bei diesen herkömmlichen Flüssigkeitsverteilern besteht die Gefahr der Tropfenbildung und damit die Gefahr des Mitreissens kleiner Tröpfchen mit dem Gasstrom und damit deren Austrag aus dem Kontaktapparat. Daher müssen diesen herkömmlichen Flüssigkeitsverteilern spezielle Tröpfchenabscheider nachgeschaltet werden, die zusätzliche Kosten verursachen.

Zur Verteilung kleinster Mengen Flüssigkeit sind auch sogenannte Dünnfilmverdampfer oder auch Dünnfilmabsorber bekannt, bei denen durch einen mechanischen Wischer ein dünner Film über eine Austauschfläche verteilt wird. Dieser Variante ist konstruktiv und mechanisch aufwendig und daher teuer, anfällig und wartungsintensiv.

Bei Ausführungsformen mit offenen oder geschlossenen Rinnen oder Kanälen in Verbindung mit Überläufen und/oder Auslauföffnungen besteht die Gefahr von Verschmutzungen bzw. Verstopfung. In der speziellen Anwendung als Luftentfeuchter (Absorber) in der Klimatechnik war es bisher nicht wirtschaftlich möglich, den für die Absorption von Wasserdampf aus der Luft physikalisch benötigten, kleinsten möglichen Massenstrom an Flüssigkeit (Absorbens, in der Regel konzentrierte Salzlösung) so auf die Stoffaustauschflächen eines geeigneten Austauschapparates zu verteilen, daß ein extrem dünner, geschlossener Film eine wesentliche Konzentrationsänderung in der Flüssigkeit (Sorbens) bewirkte.

Es ist daher Aufgabe der vorliegenden Erfindung, einen Kleinstflüssigkeitsmengenverteiler anzugeben, der über die Breite einer Austauschfläche einen möglichst dünnen und geschlossenen Flüssigkeitsfilm erzeugt. Weiter ist es Aufgabe der vorliegenden Erfindung einen Stoff- und Wärmeaustauschreaktor mit einem solchen Kleinstflüssigkeitsmengenverteiler anzugeben.

Die Lösung dieser Aufgaben erfolgt durch die Merkmale des Anspruchs 1 bzw. 11.

Durch das speziell ausgebildete Kanalsystem, das mittels Bisektion an Gabelungsstellen erzeugt wird, und die regelmäßig angeordneten Austrittsöffnungen lassen sich örtlich wie auch mengenmäßig kleinste Flüssigkeitsströme gleichmäßig ohne Hilfe zusätzlicher Mechanik verteilen. Durch die Anordnung der Austrittsöffnungen über den Flüssigkeitsunterzuleitungen können Gasblasen, insbesondere beim Anfahren des Kleinstflüssigkeitsmengenverteilers leicht entweichen. Mit dem erfindungsgemäßen Kleinstflüssigkeitsmengenverteiler können Stoffaustauscher mit extrem wenig Flüssigkeit (Sorbens) und einer großen, benetzten Stoffaustauschfläche realisiert werden, so daß sich Massenverhältnisse von Gas- zu Flüssigkeitsstrom > 50 ergeben. Der erfindungsgemäße Kleinstflüssigkeitsmengenverteiler läßt sich unmittelbar auf die zu benetzende Fläche aufsetzen, so daß keine freien Tröpfchen entstehen können. Ein zusätzlicher Tröpfchenabscheider kann daher entfallen.

Gemäß einer vorteilhaften Ausgestaltung der Erfindung nach Anspruch 2 sind Austrittsöffnungen gleichmäßig entlang der zu benetzenden Fläche verteilt. Dadurch ergibt sich eine gleichmäßige Verteilung der Flüssigkeit und ein homogener und kontinuierlich dünner Flüssigkeitsfilm.

Gemäß einer vorteilhaften Ausgestaltung ist die Kanalführung so, daß der Fluidstrom in den Flüssigkeitsunterzuleitungen von unten nach oben entgegen der Schwerkraft erfolgt. Dadurch tritt eine Selbstentlüftung des Flüssigkeitszuleitungssystems in Betrieb und bei erneutem Anfahren nach Trockenfallen des Verteilers ein. Eine Behinderung der Flüssigkeitsströmung in den Flüssigkeitsunterzuleitungen und eine damit verbundene Zerstörung der gleichmäßigen Verteilung in den Kanälen durch eingedrungene Gasblasen wird verhindert (Anspruch 3).

Gemäß einer vorteilhaften Ausgestaltung der Erfindung nach Anspruch 4 wird an jeder Verzweigungsstelle der Flüssigkeitsstrom in zwei gleich große Teile geteilt und die Summe der Längen der einzelnen Flüssigkeitsunterzuleitungen von der Flüssigkeitshauptzuleitung zu der jeweiligen Flüssigkeitsaustrittsöffnung gleich groß ist. Dadurch wird die maximal mögliche Gesamtlauflänge der Fluidpartikel und damit die größt mögliche Druckdifferenz zwischen Eintritt in die Flüssigkeitshauptzuleitung und dem Austritt aus den Flüssigkeitsöffnungen erreicht.

Eine Fehlfunktion des Flüssigkeitsverteilers durch Druckänderungen während des Betriebs durch Verstopfung aufgrund von Schmutzpartikeln in Zonen niedriger oder verschwindender Strömungsgeschwindigkeit wird durch eine ausgerundete Ausgestaltung der Kanäle an den Gabelungsstellen in Strömungsrichtung vermieden (Anspruch 5).

Der erfindungsgemäße Kleinstflüssigkeitsmengenverteiler besteht aus einem Grundkörper mit einer Vorder- und einer Rückseite. Der Grundkörper weiste die Stärke (Dicke) und Länge der zu beschickenden Austauscherplatte auf. Hierdurch wird eine Behinderung des an der Gasfläche entlangstreichenden Gasstroms vermieden. In diesem Grundkörper ist ein Flüssigkeitszuleitungssystem so integriert, daß es sich beginnend von einer gemeinsamen Flüssigkeitshauptzuleitung in Richtung auf die Flüssigkeitsaustrittsöffnungen immer weiter verzweigt. Die Flüssigkeit, die in den erfindungsgemäßen Flüssigkeitsverteiler bzw. in die Flüssigkeitshauptzuleitung entweder kontinuierlich oder schwallartig (intermittierend) eintritt, wird beim Durchströmen des Flüssigkeitsverteilers an jeder Stelle in gleich große Ströme geteilt (Anspruch 7).

Gemäß einer vorteilhaften Ausgestaltung der Erfindung nach Anspruch 8 lassen sich mit einem Kleinstflüssigkeitsmengenverteiler zwei Austauscherflächen gleichzeitig benetzen.

Gemäß einer bevorzugten Ausführungsform sind die Flüssigkeitsaustrittsöffnungen entlang einer Geraden angeordnet. Hierdurch wird die Erzeugung eines gleichmäßigen Flüssigkeitsfilms unterstützt (Anspruch 9).

Durch vorteilhafte Ausgestaltung der Erfindung mit konisch nach außen sich öffnenden Austrittsöffnungen nach Anspruch 10 wird der Tropfenbildung bei Austritt der Flüssigkeit vorgebeugt.

Ein Stoff- und Wärmeaustauschreaktor mit einem solchen Kleinstflüssigkeitsmengenverteiler (Anspruch 11) ist nahezu wartungsfrei und ermöglicht die Erzeugung eines sehr dünnen und homogenen Sorbensfilms auf den Stoff- und Wärmeaustauschflächen.

Die übrigen Unteransprüche beziehen sich auf weitere vorteilhafte Ausgestaltungen der Erfindung.

Hinsichtlich der Ausgestaltung der Beschichtung auf den Stoff- und Wärmeaustauscherflächen wird auf die am gleichen Tag hinterlegte Anmeldung mit dem Titel "Stoff- und Wärmeaustauscherfläche", Anwaltsaktenzeichen P/11ZA0722/DE vollinhaltlich bezug genommen.

Ebenso wird hinsichtlich der Ausgestaltung des Stoff- und Wärmeaustauschraktors auf die am gleichen Tag hinterlegte Anmeldung mit dem Titel "Stoff- und Wärmeaustauschreaktor", Anwaltsaktenzeichen P/11ZA0720/DE vollinhaltlich bezug genommen.

Weitere Einzelheiten, Merkmale und Vorteile der Erfindung ergeben sich aus der nachfolgenden Beschreibung bevorzugter Ausführungsformen anhand der Zeichnungen.

Es zeigt:
Fig. 1 eine schematische Darstellung einer beispielhaften Ausführungsform der Erfindung,
Fig. 2 eine schematische Schnittdarstellung durch eine der Stoff- und Wärmeaustauscheroberflächen,
Fig. 3 eine Aufsicht auf den Flüssigkeitsverteilen von vorne,
Fig. 4a ein Detail der Rückansicht des Flüssigkeitsverteilers,
Fig. 4b ein Schnitt durch die Darstellung in Fig. 4a entlang der Linie D-D;
Fig. 5a, b und c Schnittdarstellungen entlang der Linien A-A, B-B und C-C in Fig. 3;
Fig. 6 und 7 eine Alternative Ausgestaltung des Flüssigkeitsverteilers; und
Fig. 8 ein Detail aus Fig. 3.

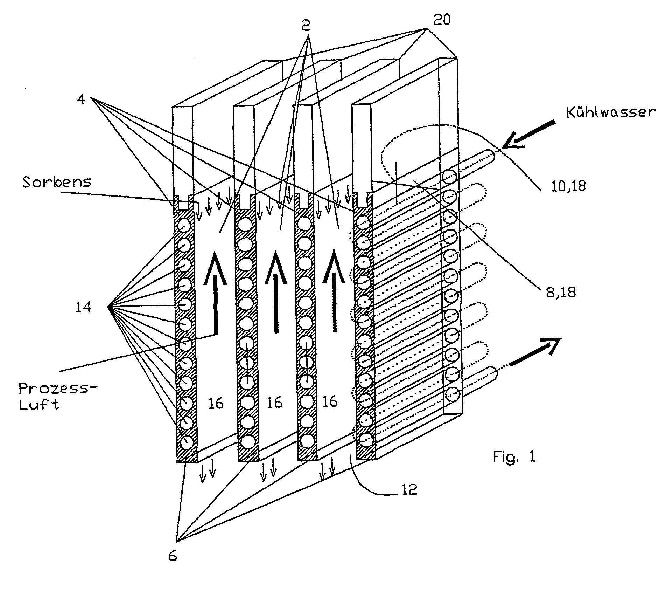

Die in Fig. 1 dargestellte beispielhafte Ausführungsform der Erfindung weist eine Mehrzahl von senkrecht, im Abstand nebeneinander angeordneten Reaktordoppelplatten 2 auf. Jede der Reaktordoppelplatten 2 weist ein oberes Ende 4, ein unteres Ende 6, eine erste und eine zweite Hauptoberfläche 8 bzw. 10 und einen Zwischenraum 12 zwischen der ersten und zweiten Hauptoberfläche 8 und 10 auf. Der Zwischenraum 12 ist als Wärmeaustauschkanalsystem 14 ausgebildet, daß beispielsweise von Wasser als Heiz- oder Kühlmedium HKM durchflossen wird. Zwischen den einzelnen Reaktordoppelplatten 2 ist ein Stoffkanalaustauschsystem 16 ausgebildet. Die ersten und zweiten Hauptoberflächen 8 und 10 der Reaktordoppelplatten 2 sind als Stoff- und Wärmeaustauscherflächen 18 ausgebildet. Die Stoff- und Wärmeaustauscherflächen 18 werden von oben her mit einem flüssigen Medium FM oder Sorbens ganzflächig benetzt. Von unten her strömt im Gegenstrom zwischen den Reaktordoppelplatten 2 ein gasförmiges Medium GM, daß im Falle der Absorption eine gasförmige Komponente an das Sorbens FM abgibt und im Falle der Desorption diese gasförmige Komponente von dem Sorbens FM wieder aufnimmt.

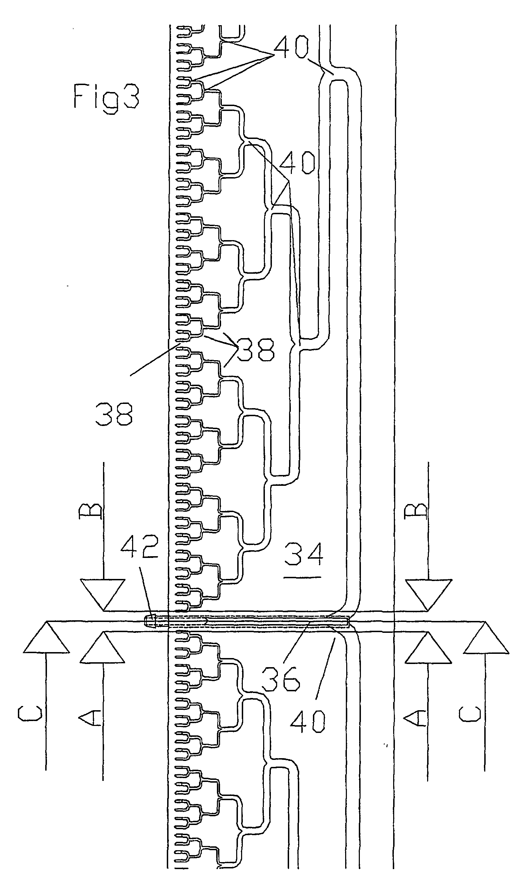

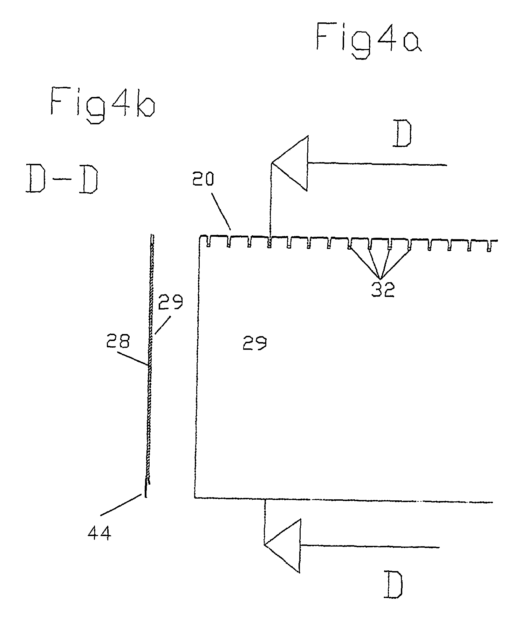

Am oberen Ende 4 der Reaktordoppelplatten 2 ist jeweils ein Flüssigkeitsverteiler bzw. Kleinstflüssigkeitsmengenverteiler 20 angeordnet, der das Sorbens FM über die gesammte Breite der Reaktordoppelplatten 2 auf allen Stoff- und Wärmetauscherflächen 18 zur Bildung eines dünnen Flüssigkeitsfilm bereitstellt. Details des Flüssigkeitsverteilers 20 werden in den Fig. 3, 4 und 5 beschrieben.

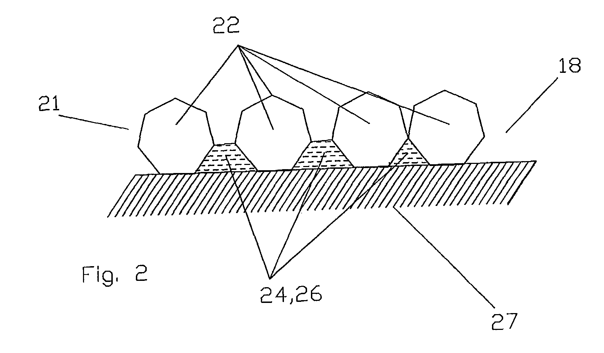

Die Stoff- und Wärmeaustauscherflächen 18 weisen eine Oberflächenbeschichtung 21 mit kleinen Festkörperpartikeln 22, z. B. Sandkörnern auf, wie dies schematisch in Fig. 2 dargestellt ist. Die Stoff- und Wärmeaustauscherflächen 18 weisen damit die Struktur bzw. Oberfläche von Sandpapier auf. Zwischen den einzelnen Festkörperpartikeln bzw. Sandkörnern 22 sind aufgrund der Form und der Nebeneinanderanordnung der Sandkörner 22 Frei- und Hohlräume 24 ausgebildet. Diese kleinen Frei- und Hohlräume 24 bedingen durch ihre Kapillarwirkung die gleichmäßige Verteilung des Sorbens FM in Form eines kontinuierlichen dünnen Flüssigkeitsfilms 26 auf den Stoff- und Wärmaustauscherflächen 18. Wie in Fig. 2 dargestellt ist, sind die Sandkörner 22 einzeln nebeneinander auf den Stoff- und Wärmeaustauscherflächen 18 angeordnet. Durch diese einlagige Anordnung wird ein sehr dünner Flüssigkeitsfilm ermöglicht.

Die Beschichtung 21 bzw. die Sandkörner 22 werden mittels eines Klebers dauerhaft auf der Stoff- und Wärmeaustauscherfläche 18 fixiert. Alternativ kann die Beschichtung 21 auf auf einem nicht näher dargestellten Zwischenträger aufgebracht sein, der dann auf die Stoff- und Wärmeaustauscherflächen 18 aufgeklebt wird.

Die Fig. 3 bis 5 zeigen eine beispielhafte Ausgestaltung des Flüssigkeitsverteilers 20 mit dem das flüssige Sorbens FM vom oberen Ende 4 der Reaktordoppelplatten 2 auf die Stoff- und Wärmeaustauscherflächen 18 aufgebracht wird. Der Flüssigkeitsverteiler 20 weist einen rechteckigen und plattenförmigen Grundkörper 27 mit einer Vorderseite 28 und einer Rückseite 29 auf. Die Breite und Dicke des Flüssigkeitsverteilers 20 entspricht der Breite und Dicke der Reaktordoppelplatten 2. An der Oberkante des Flüssigkeitsverteilers 20 sind in regelmäßigen Abständen vordere und hintere Flüssigkeitsaustrittsöffnungen 30 und 32 in gleichem Abstand nebeneinander angeordnet, wobei sich vordere und hintere Flüssigkeitsaustrittsöffnungen 30, 32 in ihrer Abfolge abwechseln. Die vorderen Flüssigkeitsaustrittsöffnungen 30 benetzen daher die Vorderseite 28 des Flüssigkeitsverteilers 20 und die erste Hauptoberfläche 8 der Reaktordoppelplatte 2 und die hinteren Flüssigkeitsaustrittsöffnungen 32 benetzen die Rückseite 29 und die zweite Hauptoberfläche 10.

Den Flüssigkeitsaustrittsöffnungen 30 und 32 werden über ein Flüssigkeitszuleitungssystem 34 Flüssigkeit bzw. Sorbens FM zugeführt. Das Flüssigkeitszuleitungssystem 34, das auf der Vorderseite 28 zu sehen ist, umfaßt eine gemeinsame Flüssigkeitshauptzuleitung 36 und eine Vielzahl von Flüssigkeitsunterzuleitungen 38. Hierbei spaltet sich die Flüssigkeitshauptzuleitung 36 durch wiederholte Bisektion an Gabelungsstellen 40 in die Flüssigkeitsunterzuleitungen 38 auf, bis schließlich für jede der Flüssigkeitsaustrittsöffnungen 30 und 32 eine eigene Flüssigkeitsunterzuleitung 38 vorliegt. In der in Fig. 3 gezeigten Ausführungsform weist 64 Austrittsöffnungen 30 zur ersten Hauptoberfläche 8 hin auf und 64 Austrittsöffnungen 32 zur zweiten Hauptoberfläche 10 hin auf. Die Flüssigkeitshauptzuleitung 36 spaltet sich an der ersten Gabelungsstelle 40 in zwei Flüssigkeitsunterzuleitungen 38 auf, die sich noch fünf mal jeweils in zwei Flüssigkeitsunterzuleitungen 38 aufspalten bis für jede der 128 Flüssigkeitsaustrittsöffnungen 30 und 32 eine Flüssigkeitsunterzuleitung 38 vorliegt.

Die Flüssigkeitshauptzuleitung 36 weist eine über der oberen Kante des Flüssigkeitsverteilers 20 liegendes Anschlußstück 42 auf, über das das flüssige Sorbens FM eingespeist wird. Die Flüssigkeitshauptzuleitung 36 endet am tiefsten Punkt des Flüssigkeitszuleitungssystems 34 und die Flüssigkeitsunterzuleitungen 38 erstrecken sich ausschließlich in horizontaler oder in vertikaler Richtung nach oben entgegen der Schwerkraft. Durch diese Anordnung der Flüssigkeitsunterzuleitungen 38 wird eine Blasenbildung in dem Flüssigkeitszuleitungssystem 34 vermieden, was zu diskontinuierlicher Filmbildung führen könnte.

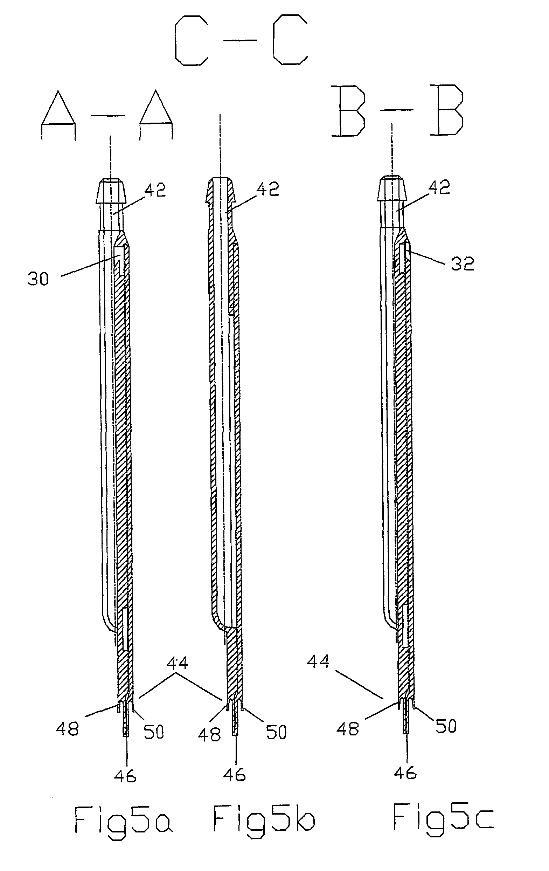

Wie aus den Detaildarstellungen in Fig. 5a und Fig. 5c zu ersehen ist, sind die Austrittsöffnungen 30 bzw. 32 nach außen hin konisch ausgebildet. Durch diese Formgebung wird Tropfenbildung beim Austreten des flüssigen Sorbens FM aus den Flüssigkeitsaustrittsöffnungen 30, 32 vermieden und die gleichmäßige Benetzung der Stoff- und Wärmetauscherflächen 18 gewährleistet. Sowohl die Vorderseite 28 als auch die Rückseite 29 des Flüssigkeitsverteilers 20 sind in dem Bereich unter den Austrittsöffnungen 30 bzw. 32 mit der gleichen Beschichtung 21 versehen, wie die Wärmetauscherflächen 18. Hierdurch wird eine kontinuierliche Filmbildung beginnend an den Flüssigkeitsaustrittsöffnungen 30, 32 bis zum unteren Ende 6 der Wärmetauscherflächen 18 gewährleistet.

Der Flüssigkeitsverteiler 20 wird mittels eines Steckmechanismus 44 auf der jewieligen Reaktordoppelplatte 2 aufgesteckt. Der Steckmechanismus 44 ist im Querschnitt betrachtet M-förmig - siehe Figuren a, 5b und 5c - und weist einen mittleren nach unten vorstehenden Steckstreifen 46 und links und rechts bzw. vorne und hinten einen vorderen Abdeckstreifen 48 und einen hinteren Abdeckstreifen 50 auf. Der vordere Abdeckstreifen 48 überlappt dabei die erste Hauptoberfläche 8 und der hintere Abdeckstreifen 50 überlappt die zweite Hauptoberfläche 10.

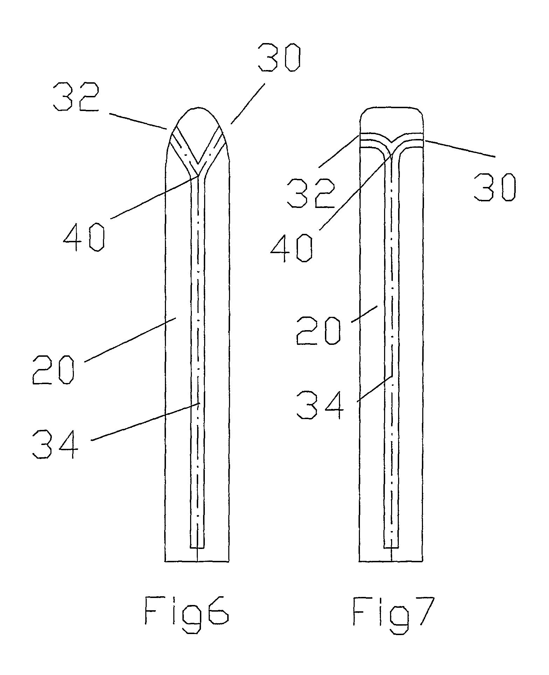

Fig. 6 und 7 zeigen Schnittdarstellungen alternativer Ausführungsformen des Flüssigkeitsverteilers 20. Die Ausführungsformen gemäß den Fig. 6 und 7 unterscheiden sich von der Ausführungsform nach Fig. 5 durch die Ausbildung der Flüssigkeitsaustrittsöffnungen 30 und 32. Die vorderen und die hinteren Flüssigkeitsaustrittsöffnungen 30, 32 liegen auf gleicher Höhe und sind nicht, wie bei der Ausführungsform nach Fig. 5, seitlich zueinander versetzt. Bei der Ausführungsform nach Fig. 6 führen die unmittelbar mit den Austrittsöffnungen 30, 32 verbundenen Flüssigkeitsunterzuleitungen schräg nach oben und außen. Bei der Ausführungsform nach Fig. 7 führen diese letzten Flüssigkeitsunterzuleitungen 38 waagrecht nach außen. Bei der Ausführungsform nach Fig. 7 ist die Gabelungsstelle 40 gerundet ausgebildet um Wirbel und Unregelmäßigeiten in der Strömmungsgeschwindigkeit zu vermeiden.

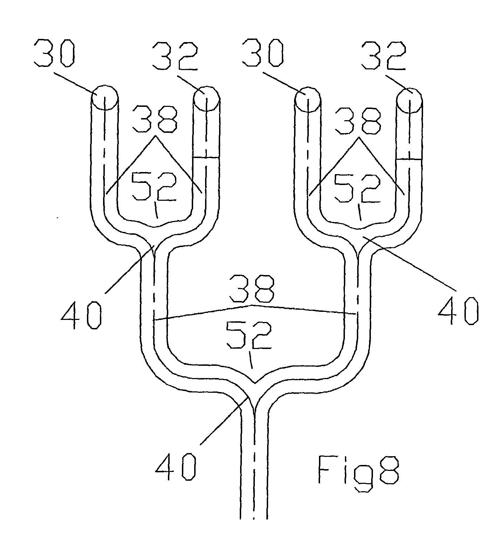

Fig. 8 zeigt eine Detaildarstellung aus Fig. 3 mit gerundeten Ausbildung der Gabelungsstellen 40. Die Flüssigeitsunterzuleitungen 38 weisen an den Gabelungstellen keilförmige Einbuchtungen 52 auf, wodurch sich die gerundete Form der Gabelungsstellen ergibt.

Um ein Verstopfen der kleinsten Flüssigkeitsunterzuleitungen zu verhindern, wird der Mindestquerschnitt der kleinsten Flüssigkeitsunterzuleitung doppelt so groß wie die größten zu erwartenden Schmutzpartikelabmessungen gewählt (typischerweise 1 mm²).

Der vorstehend beschriebene Kleinstflüssigkeitsmengenverteiler ist insbesondere für den Einsatz in einem Stoff- und Wärmeaustauschreaktor zur Entfeuchtung und Kühlung von Luft geeignet. Hierbei wird die Luft auf sorptivem Weg entfeuchtet und dabei gleichzeitig eine sorptive Flüssigkeit, zumeist eine wässrige Lösung eines oder mehrer Salze, stark verdünnt (Absorption) oder Luft befeuchtet und das verwendete Sorbens dabei stark aufkonzentriert (Desorption). Die Heiz- und Kühlflüssigkeit, welche in dem Wärmeaustauschkanalsystem 14 von dem flüssigen Sorbens FM und der Luft GM stofflich getrennt strömt, führt dem Sorptionsprozeß dabei Wärme zu (Desorption oder Absorption). Die Kühlflüssigkeits HKM wird zur Erreichung der maximalen Kühltemperaturspreizung, bei der Absorption im Gegenstrom oder Kreuzgegenstrom zu der Luft GM geführt. Bei der Desorption wird es im Gegenstrom oder Kreuzgegenstrom zum Sorbens FM geführt. Im Fall der Absorption wird dabei das konzentrierteste Sorbens am stärksten gekühlt, wodurch der Gleichgewichtsdampfdruck des Sorbens so niedrig wie möglich wird. Bei der Desorption wird dagegen das konzentrierteste Sorbens mit dem heißesten Heizmedium HKM in Kontakt gebracht, was die größte mögliche Gleichgewichtswasserdampfdruckerhöhung in dem Sorbens bewirkt. Beide Maßnahmen stellen jeweils das größtmögliche Stoffaustauschpotential des jeweiligen Prozesses (Absorption oder Desorption) zur Verfügung.

Die Stoff- und Wärmeaustauscherflächen 18, die gleichzeitig das Sorbens FM und die Luft GM von der Kühlflüssigkeit HKM stofflich trennen, stehen zum Zwischenraum 12 zwischen den Reaktordoppelplatten 2 hin vollständig mit dem Kühl- bzw. Heizmedium HKM in Kontakt und die andere Seite, d.h. die Stoff- und Wärmeauscherflächen 18, sind mit dem flüssigen Sorbens FM benetzt. Das flüssige Sorbens FM bildet auf den Stoff- und Wärmeaustauscherflächen 18 einen extrem dünnen, geschlossenen Film 26, der der Schwerkraft folgend an den Stoff- und Wärmeaustauscherflächen 18 herunterläuft. Durch diesen reinen Flüssigkeitskontakt sowohl auf der Innenseite als auch auf der Außenseite der Reaktordoppelplatten 2 wird ein hoher Wärmeübergangskoeffizient erzielt und damit ein hoher Wärmedurchgang von der Kühl- bzw. Heiflüssigkeit HKM durch die trennende Wand auf das Sorbens FM und auf die an dem Sorbensfilm 26 entlang streichende Luft GM erreicht. Dadurch wird gleichzeitig auch ein optimaler Stoffübergang erreicht. Der geschlossene Sorbensfilm 26 wird durch die spezielle Beschichtung 21 mit kleinen Festkörperpartikeln 22 erreicht, die bewirkt, daß eine extrem kleine Sorbensmenge FM die Wärmetauscherflächen 18 benetzt und gleichmäßig und kontinuierlich nach unten läuft. Die extrem kleine Sorbensmenge wird von dem Flüssigkeitsverteiler 20 von der Oberkante der Wärmetauscherflächen 18 her über die gesamte Breite der Reaktordoppelplatten 2 verteilt, ohne dabei Tropfen zu bilden, die von der Luftströmung mitgerissen werden könnten. Der Flüssigkeitsverteiler 20 ragt hierbei nicht oder nur minimal in den freien Luftströmungsquerschnitt zwischen den Reaktordoppelplatten 2 hinein, so daß keine nennenswerte Beeinträchtigung der Strömung auftritt, die zu einer Erhöhung des Strömungsdruckverlustes führen würde.

Der gesamte Stoff- und Wärmeaustauschreaktor läßt sich aus Kunststoff herstellen und sehr dünn ausführen. Die Dicke der einzelnen Reaktordoppelplatten 2 beträgt beispielsweise 3 mm. In dem Zwischenraum 12 der Reaktordoppelplatten 2 sind in regelmäßigen Abständen Stege - nicht dargestellt - vorgesehen, der von der Kühlflüssigkeit HKM meanderförmig durchströmt wird. Das zwischen den Reaktordoppelplatten 2 ausgebildete Stoffaustauschkanalsystem 16 wird von der Luft GM entgegen der Schwerkraft und von dem flüssigekn Sorbens FM mit der Schwerkraft in direktem, kontinuierlichen Gegenstrom durchströmt.

### Bezugszeichenliste:

- 2: Reaktordoppelplatte
- 4: oberes Ende von 2
- 6: unteres Ende von 2
- 8: erste Hauptoberfläche von 2
- 10: zweite Hauptoberfläche von 2
- 12: Zwischenraum in 2
- 14: Wärmeaustausch-Kanalsystem
- 16: Stoffaustausch-Kanalsystem
- 18: Stoff- und Wärmeaustauscherflächen
- 20: Flüssigkeitsverteiler
- 21: Beschichtung von 18, 2
- 22: kleine Festkörperpartikel, Sandkörner
- 24: Frei- und Hohlräume
- 26: Flüssigkeitsfilm aus Sorbens FM
- 27: Grundkörper von 20
- 28: Vorderseite
- 29: Rückseite
- 30: vordere Flüssigkeitsaustrittsöffnungen
- 32: hintere Flüssigkeitsaustrittsöffnungen
- 34: Flüssigkeitszuleitungssystem
- 36: Flüssigkeitshauptzuleitung
- 38: Flüssigkeitsunterzuleitungen
- 40: Gabelungsstellen
- 42: Anschlußstück von 36
- 44: Steckmechanismus
- 46: mittlerer Steckstreifen
- 48: vorderer Abdeckstreifen
- 50: hinterer Abdeckstreifen
- 52: keilförmige Einbuchtung

## Patentansprüche

1. Kleinstflüssigkeitsmengenverteiler zum Erzeugen eines dünnen Flüssigkeitsfilms (26) auf einer zu benetzenden Fläche (18), die einen direkten Kontakt zwischen einem Gas und einer Flüssigkeit herstellt, mit:
einer geraden Anzahl von Flüssigkeitsaustrittsöffnungen (30, 32), die entlang der zu benetzenden Fläche (18) angeordnet sind,
einem Flüssigkeitszuleitungssystem (34), das ausgehend von einer gemeinsamen Flüssigkeitshauptzuleitung (36) durch wiederholte Bisektion an Gabelungsstellen (40) in eine Mehrzahl von Flüssigkeitsunterzuleitungen (38) aufzweigt, bis schließlich jeweils eine Flüssigkeitsunterzuleitung (38) in eine der Flüssigkeitsaustrittsöffnungen (32) mündet,
wobei die Flüssigkeitsunterzuleitungen (38) in Gebranch befindlich unter den Austrittsöffnungen (30, 32) angeordnet sind.

2. Kleinstflüssigkeitsmengenverteiler nach Anspruch 1, **dadurch gekennzeichnet, dass** die Austrittsöffnungen (30, 32) in gleichem Abstand zueinander angeordnet sind.

3. Kleinstflüssigkeitsmengenverteiler nach Anspruch 1 oder 2, **dadurch gekennzeichnet, dass** die Flüssikgeitsunterzuleitungen (38) nur so geführt sind, dass der Flüssigkeitsstrom gegen die Schwerkraft von unten nach oben oder senkrecht zur Schwerkraft quer geführt wird.

4. Kleinstflüssigkeitsmengenverteiler nach einem der vorhergehenden Ansprüche, **dadurch gekennzeichnet, dass** die Querschnitte der Flüssigkeitsunterzuleitungen (38) sich bei jeder Bisektion halbieren, und
dass die Summe der Längen der einzelnen Flüssigkeitsunterzuleitungen (38) von der Flüssigkeitshauptzuleitung (36) zu der jeweiligen Flüssigkeitsaustrittsöffnung (30, 32) konstant ist.

5. Kleinstflüssigkeitsmengenverteiler nach einem der vorhergehenden Ansprüche, **dadurch gekennzeichnet, dass** die Flüssigkeitsunterzuleitungen (38) an den Gabelungsstellen (40) gerundet ausgeführt sind.

6. Kleinstflüssigkeitsmengenverteiler nach einem der vorhergehenden Ansprüche, **gekennzeichnet durch** eine Befestigungsvorrichtung (44) zum Fixieren des Kleinstflüssigkeitsmengenverteilers an der zu benetzenden Fläche (18).

7. Kleinstflüssigkeitsmengenverteiler nach einem der vorhergehenden Ansprüche, **gekennzeichnet durch** einen plattenförmigen Grundkörper mit einer Vorder- und einer Rückseite, wobei die Austrittsöffnungen (30, 32) im oberen Bereich des plattenförmigen Grundkörpers (27) angeordnet sind.

8. Kleinstflüssigkeitsmengenverteiler nach Anspruch 7, **dadurch gekennzeichnet, daß** nebeneinander unmittelbar benachbarte Austrittsöffnungen (30, 32) abwechselnd zur Vorder- (28) und zur Rückseite (29) münden.

9. Kleinstflüssigkeitsmengenverteiler nach einem der vorhergehenden Ansprüche, **dadurch gekennzeichnet, dass** die Austrittsöffnungen (30, 32) entlang einer Geraden angeordnet sind.

10. Kleinstflüssigkeitsmengenverteiler nach einem der vorhergehenden Ansprüche, **dadurch gekennzeichnet, dass** die Austrittsöffnungen (30, 32) sich konisch nach außen öffnend ausgebildet sind.

11. Kleinstflüssigkeitsmengenverteiler nach einem der vorhergehenden Ansprüche, **dadurch gekennzeichnet, dass** die Gabelungsstellen (40) jeweils eine Einbuchtung (52) aufweisen, die bezüglich der die Gabelungsstellen durchströmenden Flüssigkeit symmetrisch angeordnet ist.

12. Stoff- und Wärmeaustauschreaktor mit
zwei stofflich voneinander getrennten und thermisch miteinander gekoppelten Kanalsystemen, von denen das eine Kanalsystem (Wärmeaustausch-Kanalsystem 14) von einem flüssigen oder gasförmigen Heiz- oder Kühlmedium HKM und das andere Kanalsystem (Stoffaustauschkanalsystem 16) von einem gasförmigen Medium GM und einem weiteren flüssigen Medium FM durchströmt ist,
wenigstens einer im wesentlichen senkrecht angeordneten Reaktordoppelplatte (2), die ein oberes Ende (4), ein unteres Ende (6), eine erste und eine zweite Hauptoberfläche (8, 10) und einen Zwischenraum (12) zwischen der ersten und zweiten Hauptoberfläche (8, 10) aufweist,
wobei das Wärmeaustausch-Kanalsystem (14) in dem Zwischenraum (12) angeordnet ist,
wobei wenigstens eine der Hauptoberflächen (8, 10) als Stoff- und Wärmeaustauscherfläche (18) ausgebildet ist,
wobei die wenigstens eine Stoff- und Wärmeaustauscherfläche (18) mit einem die Oberflächenspannung reduzierenden Material (21) beschichtet ist und/oder eine die Oberflächenspannung reduzierende Oberflächenstruktur aufweist,
wobei an der wenigstens einen Stoff- und Wärmeaustauscherfläche (18) das gasförmige Medium GM und das flüssige Medium FM im Gegenstrom geführt sind, und
wobei am oberen Ende (4) der wenigstens einen Reaktordoppelplatte (2) ein Flüssigkeitsverteiler (20) zum Erzeugen eines dünnen Flüssigkeitsfilms (26) aus dem flüssigen Medium FM auf der wenigstens einen Stoff- und Wärmeaustauscherfläche (18) vorgesehen ist, **dadurch gekennzeichnet,**
**dass** der Flüssigkeitsverteiler (20) ein Kleinstmengenflüssigkeitsverteiler nach einem der vorhergehenden Ansprüche ist.

## Claims

1. Ultra low flow liquid distributor for minimum amounts of liquids for generating a thin liquid film (26) on a transfer surface with, said transfer surface providing direct contact between gas and liquid,
- an even number of liquid outlet openings. (30, 32) which are arranged along the surface (18), which is to be moistened,
- a liquid supply system (34) starting from a common main supply (36), which is branched by repetitive bisection at bifurcations (40) into a multitude of liquid sub-mains (38), until eventually each liquid supply sub-main (38) feeds into one of the liquid outlet openings (30, 32),
- wherein the liquid supply sub-mains (38) are arranged below the liquid outlet openings (30, 32) in use.

2. Ultra low flow liquid distributor in accordance with Claim 1, **characterized by** the outlet openings (30, 32) being spaced at equal intervals.

3. Ultra low flow liquid distributor in accordance with Claim 1 or 2, **characterized in that** said liquid supply sub-mains (38) being arranged solely in such a way that the liquid flow is flowing against gravity from the bottom to the top or across, perpendicular to gravity.

4. Ultra low flow liquid distributor in accordance with one of the preceding Claims, **characterized in**
- **that** the cross sections of the liquid supply sub-mains (38) being halved at each bifurcation and
- **that** the total length of each individual liquid supply sub-main from the main liquid supply to the respective liquid outlet opening (30, 32) being equal.

5. Ultra low flow liquid distributor in accordance with one of the preceding Claims, **characterized in that** said liquid supply sub-mains (38) being of a rounded shape at the bifurcations (40).

6. Ultra low flow liquid distributor in accordance with one of the preceding Claims, **characterized by** an attachment device (44) for attaching the ultra low flow liquid distributor at said surface (18) to be moistened.

7. Ultra low flow liquid distributor in accordance with one of the preceding Claims, **characterized by** a base body in shape of a panel with a front side and a rear side, where the liquid outlet openings (30, 32) are arranged in the upper section of the panel shaped base body (27).

8. Ultra low flow liquid distributor in accordance with Claim 7, **characterized in that** immediately neighbouring liquid outlet openings (30, 32) feeding alternately to the front side (28) and to the rear side (29).

9. Ultra low flow liquid distributor in accordance with one of the preceding Claims, **characterized in that** the liquid outlet openings (30, 32) being arranged in a straight line.

10. Ultra low flow liquid distributor in accordance with one of the preceding Claims, **characterized in that** the liquid outlet openings (30, 32) being shaped conically, opening outwards.

11. Ultra low flow liquid distributor in accordance with one of the preceding Claims, **characterized in that** each of said bifurcations comprises a wedge-shaped bulge being symmetrically arranged with respect to the fluid streaming through each of said bifurcations.

12. Mass and heat transfer reactor, comprising:
- two duct systems (14, 16), which are isolated from each other with regard to the mass flow, but are coupled with regard to the heat transfer, whereby there is a flow of a liquid or gaseous heating or cooling media (HKM) in one duct system (heat transfer duct system 14) and in the other duct system (mass transfer duct system 16) a flow of a gaseous media (GM) and a further liquid media (FM).
- at least one mainly vertically arranged reactor double plate (2) with one upper end (4) and one lower end (6), a primary and a secondary main surface (8, 10) and a void (12) between primary and secondary main surface (8, 10)
wherein
- said heat transfer duct system (14) is accommodated in the void (12);
- at least one of the main surfaces (8, 10) is designed to serve as mass and heat transfer surface (18);
- said at least one mass and heat transfer surface (18) is coated with a material (21) to reduce the surface tension and/or has a surface structure which reduces the surface tension,
- at this mass and heat transfer surface (18) the gaseous media (GM) and the liquid media (FM) are ducted in such a way as to establish a counter flow; and
- at the upper end (4) of said at least one reactor double plate, a liquid distribution system (20) is connected in such a way as to establish a thin film of moisture (26) of the liquid media (FM) on said at least one mass and heat transfer surface (8, 10), **characterized in that**
- said liquid distribution system (20) being one of the ultra low flow liquid distributors in accordance with one of the preceding Claims.

## Revendications

1. Distributeur de micro-quantités de liquide pour générer une pellicule de liquide (26) mince sur une surface (18) à humecter, qui établit un contact direct entre un gaz et un liquide, avec
- un nombre pair d'orifices de sortie de liquide (30, 32), qui sont disposés le long de la surface (18) à humecter
- un système d'arrivée de liquide (34), qui se divise à partir d'une arrivée principale de liquide (36) commune par une bissection répétée à des points de bifurcation (40) en une pluralité de sous-conduites de liquide (38), jusqu'à ce que, finalement, chacune des sous-conduites de liquide (38) débouche dans l'un des orifices de sortie de liquide (32), les sous-conduites de liquide (38) étant disposées sous les orifices de sortie (30, 32) lorsqu'elles sont en fonctionnement.

2. Distributeur de micro-quantités de liquide selon la revendication 1, **caractérisé en ce que** les orifices de sortie (30, 32) sont disposés à égale distance les uns des autres.

3. Distributeur de micro-quantités de liquide selon la revendication 1 ou 2, **caractérisé en ce que** les sous-conduites de liquide (38) sont guidées seulement de telle sorte que le courant de liquide est guidé de bas en haut à l'encontre la force de gravité ou perpendiculairement à la force de gravité.

4. Distributeur de micro-quantités de liquide selon l'une des revendications précédentes, **caractérisé en ce que** les sections des sous-conduites de liquide (3 8) sont divisées par deux à chaque bissection et **en ce que** la somme des longueurs des sous-conduites de liquide (38) individuelles de la conduite principale de liquide (36) à l'orifice de sortie du liquide (30, 32) correspondant est constante.

5. Distributeur de micro-quantités de liquide selon l'une des revendications précédentes, **caractérisé en ce que** les sous-conduites de liquide (38) sont réalisées avec une forme arrondie aux points de bifurcation (40).

6. Distributeur de micro-quantités de liquide selon l'une des revendications précédentes, **caractérisé par** un dispositif de fixation (44) pour la fixation du distributeur de micro-quantités de liquide sur la surface (18) à humecter.

7. Distributeur de micro-quantités de liquide selon l'une des revendications précédentes, **caractérisé par** un corps de base en forme de plaque avec un côté avant et un côté arrière, les orifices de sortie (30, 32) étant disposés dans la zone supérieure du corps de base (27) en forme de plaque.

8. Distributeur de micro-quantités de liquide selon la revendication 7, **caractérisé en ce que** des orifices de sortie (30, 32) voisins directement juxtaposés débouchent alternativement sur le côté avant (28) et sur le côté arrière (29).

9. Distributeur de micro-quantités de liquide selon l'une des revendications précédentes, **caractérisé en ce que** les orifices de sortie (30, 32) sont disposés le long d'une ligne droite.

10. Distributeur de micro-quantités de liquide selon l'une des revendications précédentes, **caractérisé en ce que** les orifices de sortie (30, 32) sont réalisés en s'ouvrant en cône vers l'extérieur.

11. Distributeur de micro-quantités de liquide selon l'une des revendications précédentes, **caractérisé en ce que** les points de bifurcation (40) présentent chacun un creux (52), qui est disposé de façon symétrique par rapport au liquide traversant les points de bifurcation.

12. Réacteur d'échange de matière et de chaleur comprenant deux systèmes de canal séparés l'un de l'autre pour ce qui est de la matière et couplés thermiquement entre eux, dont un système (système de canal d'échange de chaleur 14) est traversé par un fluide de chauffage ou de refroidissement HKM liquide ou gazeux et l'autre système (système de canal d'échange de matière 16) par un fluide GM gazeux et par un autre fluide FM liquide,
au moins une double plaque de réacteur (2) disposée sensiblement verticalement, qui présente une extrémité (4) supérieure, une extrémité (6) inférieure, une première et une seconde surfaces principales (8, 10) et un espace intermédiaire (12) entre la première et la seconde surfaces principales (8, 10),
le système de canal d'échange de chaleur (14) étant disposé dans l'espace intermédiaire (12),
au moins l'une des surfaces principales (8, 10) étant réalisée sous forme d'une surface d'échange de matière et de chaleur (18),
la au moins une surface d'échange de matière et chaleur (18) étant revêtue avec un matériau (21) réduisant la tension superficielle et/ou présentant une structure de surface réduisant la tension superficielle,
le fluide GM gazeux et le fluide FM liquide étant guidés à contre-courant sur la au moins une surface d'échange de matière et de chaleur (18) et un répartiteur de liquide (20) pour générer une pellicule de liquide (26) mince provenant du fluide FM liquide sur la au moins une surface d'échange de matière et de chaleur (18) étant prévu à l'extrémité (4) supérieure de la au moins une double plaque de réacteur (2),
**caractérisé en ce que** le distributeur de liquide (20) est un distributeur de micro-quantités de liquide selon l'une des revendications précédentes.
